# EUROPEAN PATENT APPLICATION

(11) **EP 3 226 557 A1**
(43) Date of publication of application: **04.10.2017**
(21) Application number: 17164090.7
(22) Date of filing: 31.03.2017
(51) Int. Cl.: H04N 9/31, G03B 21/20

(54) **PROJECTION DEVICE**

(30) Priority: 31.03.2016 JP 2016071931
(71) Applicant: Funai Electric Co., Ltd., Daito Osaka 574-0013 (JP)
(72) Inventor: ITO, Tatsuya, Daito Osaka 574-0013 (JP)
(74) Representative: Global IP Europe Patentanwaltskanzlei

(57) **Abstract**

A projection device comprises a light source, a first attenuator and a second attenuator, a first driver, a second driver, a light receiving element, and a controller. The light source is configured to emit light. The first attenuator and the second attenuator are configured to attenuate intensity of the light from the light source. The first driver is configured to drive the first attenuator. The second driver is configured to drive the second attenuator. The light receiving element is configured to receive the light distributed by the second attenuator. The controller is configured to control the second driver to control the distribution ratio of the light distributed to the light receiving element by the second attenuator according to control of transmissivity of light at the first attenuator by the first driver.

## Description

### BACKGROUND

### Field of the Invention

The present invention generally relates to a projection device.

### Background Information

A display device called a head-up display (HUD) has been known in the art. These head-up displays are often installed in vehicles, as discussed in JP 2007-86387 A, for example. In this case, for example, a display image is projected onto the windshield by a projection device provided to the dashboard of the vehicle. This display image can be viewed by the driver.

### SUMMARY

With an automotive head-up display such as the one mentioned above, the brightness of the display image needs to be varied according to the brightness of the surroundings, for example, in order to make the display image easy to see if there is a change in the brightness of the surroundings, such as when the vehicle goes into a tunnel, or to compensate between night and day. Specifically, a dimmer needs to be provided to the projection device.

While performing dimming with such a dimmer, color drift of colored laser lights can occur in the display image due to the difference of transmissivity characteristics of the dimmer for the the colored laser lights. Conventionally, the color drift is detected by a light receiving element, and the output of the colored laser lights are controlled to correct the color drift based on the detection result by the light receiving elements.

However, it is not easy to obtain a broad dimming range of the dimmer due to a light quantity monitor range of the light receiving element. Specifically, the light quantity monitor range of the light receiving element is generally limited by a range of an amount of light received by the light receiving element and maximum and minimum receivable light amounts as the capability of the light receiving element itself. The maximum receivable light amount is the light reception amount over which the detection signal of the light receiving element reaches saturation. The minimum receivable light amount is the light reception amount under which the S/N ratio of the detection signal of the light receiving element can no longer be permitted.

If an attempt is made to ensure a broad dimming range, it is not easy to set the range of the light reception amount received by the light receiving element so that the maximum light reception amount received by the light receiving element will not exceed the maximum receivable light amount of the light receiving element, and so that the minimum light reception amount received by the light receiving element will not drop under the minimum receivable light amount of the light receiving element, resulting in a worsening of the S/N ratio of the detection signal.

One object is to provide a projection device with which the range of the light reception amount received by the light receiving element can be suitably set even when a broad dimming range is ensured.
[1] In view of the state of the known technology and in accordance with a first aspect of the present invention, a projection device comprises a light source, a first attenuator and a second attenuator, a first driver, a second driver, a light receiving element, and a controller. The light source is configured to emit light. The first attenuator and the second attenuator are configured to attenuate intensity of the light from the light source. The first driver is configured to drive the first attenuator. The second driver is configured to drive the second attenuator. The light receiving element is configured to receive the light distributed by the second attenuator. The controller is configured to control the second driver to control the distribution ratio of the light distributed to the light receiving element by the second attenuator according to control of transmissivity of light at the first attenuator by the first driver.
   With this configuration, even though a broad dimming range is ensured by the drive of the first attenuator, the range of the light reception amount received by the light receiving element can be narrower. Therefore, it is possible to set a suitable range of the light reception amount received by the light receiving element such that the light reception amount will not exceed the maximum receivable light amount of the light receiving element, and will not drop under the minimum receivable light amount of the light receiving element, resulting in a worsening of the S/N ratio of the detection signal.
[2] In accordance with a preferred embodiment according to the projection device mentioned above, the controller is configured to control the second driver to increase the distribution ratio of the light distributed to the light receiving element by the second attenuator in response to controlling the first driver to reduce the transmissivity of the light at the first attenuator.
[3] In accordance with a preferred embodiment according to any one of the projection devices mentioned above, the controller is configured to control the second driver to increase the distribution ratio by switching drive of the second attenuator stepwisely.
[4] In accordance with a preferred embodiment according to any one of the projection devices mentioned above, the controller is configured to control the second driver to switch the drive of the second attenuator after controlling the first driver to temporarily increase the transmissivity of the light at the first attenuator.
   With this configuration, it is less likely that a rise in the distribution ratio of the light to the light receiving element side will cause the adjusted light to become dark suddenly.
[5] In accordance with a preferred embodiment according to any one of the projection devices mentioned above, the controller is configured to control the second driver to increase the distribution ratio by switching the drive of the second attenuator in two stages.
   With this configuration, since the distribution ratio is only two stages, the amount of light emitted by the second attenuator can be predicated very accurately from the light reception amount received by the light receiving element.
[6] In accordance with a preferred embodiment according to any one of the projection devices mentioned above, the light source includes a plurality of light emission elements configured to output different colors of light. A first transmissivity characteristics indicating a relation between the transmissivity of of the light at the first attenuator for each color and a drive voltage of the first attenuator and a second transmissivity characteristics indicating a relation between the transmissivity of the light at the second attenuator for each color and a drive voltage of the second attenuator are different from each other.
[7] In accordance with a preferred embodiment according to any one of the projection devices mentioned above, a descending order of transmissivities of the colors at a given drive voltage in a drive voltage region of the first transmissivity characteristics is reversed from a descending order of transmissivities of the colors at a given drive voltage in a drive voltage region of the second transmissivity characteristics.
   With this configuration, when the transmissivity of the second attenuator is lowered to raise the distribution ratio, the difference in transmissivity of the first attenuator by color can be cancelled out. Therefore, this is effective at suppressing color drift.
[8] In accordance with a preferred embodiment according to any one of the projection devices mentioned above, the first attenuator includes a first liquid crystal element and a first polarizer. The second attenuator includes a second polarizer, a second liquid crystal element, and a third polarizer.
   With this configuration, the transmissivity of the first attenuator can be controlled by driving the first liquid crystal element with the first driver, and the distribution ratio of light distributed by the third polarizer can be controlled by driving the second liquid crystal element with the second driver.
[9] In accordance with a preferred embodiment according to any one of the projection devices mentioned above, the first polarizer and the second polarizer are formed by a single polarizer.
   With this configuration, the second polarizer is a member that is shared by the first polarizer. Thus, the number of parts can be reduced.
[10] In accordance with a preferred embodiment according to any one of the projection devices mentioned above, the first polarizer and the second polarizer are formed by separate polarizers.
[11] In accordance with a preferred embodiment according to any one of the projection devices mentioned above, a first relative polarization angle θ1 at the first attenuator is 45 degrees < θ1 < 135 degrees, where the first relative polarization angle θ1 being a relative angle between a polarization azimuth angle of the light incident on the first liquid crystal element and a polarization azimuth angle of the light emitted from the first polarizer that is disposed downstream along an optical path of the light relative to the first liquid crystal element. A second relative polarization angle θ2 at the second attenuator is 135 degrees < θ2 < 225 degrees, where the second relative polarization angle θ2 being a relative angle between a polarization azimuth angle of the light incident on the second liquid crystal element and a polarization azimuth angle of the light emitted from the third polarizer that is disposed downstream along the optical path of the light relative to the second liquid crystal element.
   With this configuration, it is possible to achieve a state in which the magnitude relation in transmissivity for each color is reversed between a region of at least a portion of the first transmissivity characteristics and a region of at least a portion of the second transmissivity characteristics.
[12] In accordance with a preferred embodiment according to any one of the projection devices mentioned above, the first relative polarization angle θ1 is 90 degrees. The second relative polarization angle θ2 is 180 degrees.
[13] In accordance with a preferred embodiment according to any one of the projection devices mentioned above, the first attenuator further includes a fourth polarizer that is disposed upstream along an optical path of the light relative to the first liquid crystal element.
   With this configuration, the fourth polarizer can adjust the polarization azimuth of light incident on the first attenuator to the desired polarization azimuth even if the polarization azimuth of light has diverged from the desired polarization azimuth.
[14] In accordance with a preferred embodiment according to any one of the projection devices mentioned above, a polarization direction of the fourth polarizer is adjustable according to a polarization direction of the light incident on the first liquid crystal element.
[15] In accordance with a preferred embodiment according to any one of the projection devices mentioned above, the projection device further comprises a second light receiving element configured to receive the light distributed by and emitted from the first polarizer.
   With this configuration, it is possible to detect the distribution ratio of light to the light receiving element side by the third polarizer at the second attenuator based on the light reception amounts received by the light receiving element and the second light receiving element. Therefore, it is possible to control the distribution ratio by driving the second liquid crystal element so as to attain the target distribution ratio.
[16] In accordance with a preferred embodiment according to any one of the projection devices mentioned above, the first attenuator is disposed upstream along an optical path of the light relative to the second attenuator.
[17] In accordance with a preferred embodiment according to any one of the projection devices mentioned above, the first liquid crystal element is disposed upstream along the optical path of the light relative to the first polarizer, and the second liquid crystal element is disposed between the second polarizer and the third polarizer along the optical path of the light.
[18] In accordance with a preferred embodiment according to any one of the projection devices mentioned above, the first liquid crystal element and the second liquid crystal element are formed by a single liquid crystal element.
[19] In accordance with a preferred embodiment according to any one of the projection devices mentioned above, the projection device further comprises a first prism, a second prism coupled to the first prism, and a third prism coupled to the second prism. The first polarizer is formed by the first prism and the second prism. The second polarizer is formed by the second prism and the third prism.
[20] In accordance with a preferred embodiment according to any one of the projection devices mentioned above, the light reflected at an interface between the first prism and the second prism is incident on an interface between the second prism and the third prism.

With the projection device of the present invention, it is possible to suitably set the range of the light reception amount received by the light receiving element even when a broad dimming range is ensured.

### BRIEF DESCRIPTION OF THE DRAWINGS

Referring now to the attached drawings which form a part of this original disclosure:
FIG. 1 is a schematic diagram of the configuration of a head-up display device in accordance with a first embodiment;
FIG. 2 shows an example of the scenery that a user sees through a windshield of the vehicle shown in FIG. 1;
FIG. 3 is a block diagram of the configuration of a projector in accordance with the first embodiment;
FIG. 4 is a perspective view of an optical system of the projector in accordance with the first embodiment;
FIG. 5 shows the configuration of a first liquid crystal attenuator in accordance with the first embodiment;
FIG. 6 shows the configuration of a second liquid crystal attenuator in accordance with the first embodiment;
FIG. 7 is a graph of an example of the transmissivity characteristics of the first liquid crystal element in accordance with the first embodiment;
FIG. 8 is a graph of an example of the transmissivity characteristics of the second liquid crystal element in accordance with the first embodiment;
FIG. 9 is a graph of an example of the drive voltage applied to the first liquid crystal element and second liquid crystal element in accordance with the first embodiment;
FIG. 10 is a graph of an example of the behavior of a monitor light reception amount in accordance with the first embodiment;
FIG. 11 is a graph of an example of the monitor proportion in accordance with the first embodiment;
FIG. 12 shows the configuration of a liquid crystal attenuator in accordance with a second embodiment;
FIG. 13 is a perspective view of a liquid crystal component in accordance with the second embodiment;
FIG. 14 is a cross sectional view of the liquid crystal component in accordance with the second embodiment;
FIG. 15 shows the configuration of a liquid crystal attenuator in accordance with a third embodiment;
FIGS. 16A, 16B, 16C, 16D, 16E, 16F, and 16G illustrate graphs of examples of the transmissivity characteristics at different settings of the relative polarization angle;
FIG. 17 is a perspective view of a rotary adjustment mechanism of various parts in the first liquid crystal attenuator;
FIG. 18 shows an example of an optical system using a liquid crystal attenuator in accordance with a comparison example; and
FIG. 19 is a graph of an example of the characteristics related to transmissivity in the configuration in FIG. 18.

### DETAILED DESCRIPTION OF EMBODIMENTS

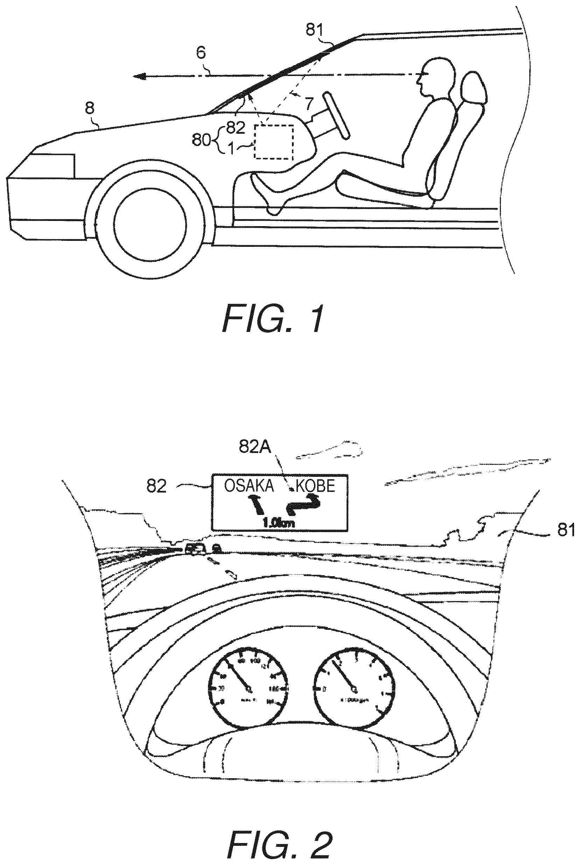

Selected embodiments will now be explained with reference to the drawings. It will be apparent to those skilled in the art from this disclosure that the following descriptions of the embodiments are provided for illustration only and not for the purpose of limiting the invention as defined by the appended claims. Referring to FIGS. 1 to 17, a head-up display device (HUD device) installed in a vehicle in accordance with the selected embodiments will be described.

### COMPARISON EXAMPLE

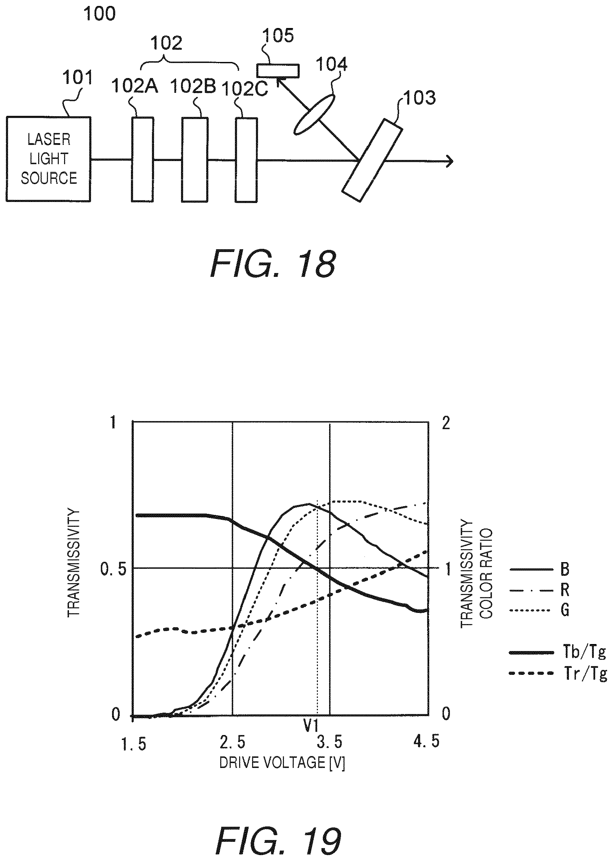

First, with reference to FIGS 18 and 19, a comparison example of an optical system in a projection device equipped with a dimmer will be briefly explained. The optical system of the projection device 100 shown in FIG. 18 comprises a laser light source 101 and a liquid crystal attenuator (light attenuator) 102 serving as a dimmer. The laser light source 101 combines three colors (three wavelengths) of laser light (RGB (R: red, G: green, B: blue)) along a single optical axis (coaxially) and outputs the product.

The liquid crystal attenuator 102 comprises a polarizing plate 102A, a liquid crystal element 102B, and a polarizing plate 102C along the optical path, in order starting from the laser light source 101. The polarizing plate 102A extracts polarized light with a specific polarization azimuth angle from the incident light. The liquid crystal element 102B controls the orientation of the liquid crystal according to the drive voltage that is applied, and adjusts the polarization azimuth of the emitted light. The polarizing plate 102C extracts polarized light with a specific polarization azimuth angle from the incident light.

The relative polarization angle, which is the relative angle of the polarization azimuth angles of polarized light extracted by the polarizing plates 102A and 102C, is set to 90 degrees, for example. In this case, the polarizing plates 102A and 102C are said to be in a crossed layout.

FIG. 19 is a graph of an example of the relation between the drive voltage of the liquid crystal element 102B and the transmissivity (vertical axis on the left side) of the three colors of light of the liquid crystal attenuator 102 featuring the polarizing plates 102A and 102C in this crossed layout. As shown by the solid line (B: blue), one-dot chain line (R: red), and broken line (G: green) in FIG. 19, transmissivity (that is, the attenuation rate) varies according to changes in drive voltage. Thus, dimming can be accomplished by varying the drive voltage.

As shown in FIG. 19, however, a characteristic of a liquid crystal attenuator is that, at a given drive voltage, the transmissivity will vary with the color (wavelength). For example, the white balance can be adjusted by adjusting the amount of light emitted by the laser light source 101 in the three colors so that the amounts of light emitted (transmitted) by the liquid crystal attenuator 102 will match in the various colors in a state in which a drive voltage V1 close to the 3.5 V shown in FIG. 19 has been applied. When the drive voltage V1 is applied, the transmissivity matches for blue and green (the transmissivity color ratio expressed by the thick solid line Tb/Tg in FIG. 19 is 1), while the transmissivity for red is lower than for green (the transmissivity color ratio expressed by the thick broken line Tr/Tg in FIG. 19 is less than 1). Therefore, blue and green, for example, are adjusted to close to the maximum amount of light of the laser light source 101, while the amount of red light is increased over blue and green.

However, if dimming is attempted by changing the drive voltage while maintaining the output of each color at the laser light source 101 adjusted as above, color drift will occur because of a change in the transmissivity color ratio, resulting in a loss of white balance. More specifically, in FIG. 19, if the drive voltage is lower than V1, then the transmissivity color ratio Tb/Tg of blue and green will steadily rise, and the transmissivity color ratio Tr/Tg of red and green will steadily fall. Specifically, there will be more blue light versus green, and conversely less red light, resulting in a loss of white balance.

As shown in FIG. 18, with the optical system of the projection device 100, a half-mirror 103 is disposed to the rear of the liquid crystal attenuator 102, and a converging lens 104 and a light receiving element 105 are further provided. The majority of the incident light is transmitted by the half-mirror 103, while the remainder is reflected (the term "half-mirror" is hereinafter used in the sense of separating transmitted light and reflected light at a constant proportion that is not limited to 1-to-1). This reflected light is then converged by the converging lens 104, received by the light receiving element 105, and subjected to opto-electrical conversion.

Consequently, the light receiving element 105 can detect the above-mentioned color drift resulting from dimming. Thus, the output of the various colors of the laser light source 101 can be controlled so as to correct for color drift based on the detection result. Here, the light quantity monitor range by the light receiving element is limited by the range of the amount of light received by the light receiving element and the maximum and minimum receivable light amounts as the capability of the light receiving element itself. The maximum receivable light amount is the light reception amount over which the detection signal of the light receiving element reaches saturation. The minimum receivable light amount is the light reception amount under which the S/N ratio of the detection signal of the light receiving element can no longer be permitted.

Thus, with the configuration of this comparison example, if an attempt is made to ensure a broad dimming range, it is not easy to set the range of the light reception amount received by the light receiving element so that the maximum light reception amount received by the light receiving element will not exceed the maximum receivable light amount of the light receiving element, and so that the minimum light reception amount received by the light receiving element will not drop under the minimum receivable light amount of the light receiving element, resulting in a worsening of the S/N ratio of the detection signal.

### FIRST EMBODIMENT

FIG. 1 is a schematic diagram of the configuration of a head-up display device (HUD device) 80 in accordance with a first embodiment. In the illustrated embodiment, the HUD device 80 is installed on a vehicle 8. However, the HUD device 80 is not limited to be installed in a vehicle. The HUD device 80 can also be installed in some other transportation device (such as a boat or an aircraft), or other device suitable for operating with the head-up display. The HUD device 80 projects a scanning laser beam 7 (projection light) from a projector (projection device) 1 toward a windshield 81 of the vehicle 8. The HUD device 80 displays the projected image within the field of view of the user. In FIG. 1, the one-dot chain line arrow 6 indicates the line of sight of the user sitting in the driver seat of the vehicle 8.

As shown in FIG. 1, a combiner 82 is affixed to the inner surface of the windshield 81. This combiner 82 is a projection member used for displaying the projected image of the projector 1 within the field of view of the user. The combiner 82 is formed, for example, from a semi-transmissive reflective material such as a half-mirror. The scanning laser beam 7 is projected from the projector 1 onto the combiner 82. This forms a virtual image in a specific region of the combiner 82. Accordingly, the user, who is looking toward the front of the vehicle 8 (that is, in the direction of the line of sight 6), can simultaneously view the outside ahead of the vehicle 8, and the projected image that is projected from the projector 1. The scanning laser beam 7 can also project directly onto the windshield 81.

FIG. 2 shows an example of the scenery seen by the user through the windshield 81. As mentioned above, the combiner 82 is installed on the windshield 81. The image projected from the projector 1 is displayed on the combiner 82. As shown in FIG. 2, the projector 1 has the function of displaying on the combiner 82 information related to car navigation (such as route information), information related to the automobile (such as fuel consumption information), and so forth. In FIG. 2, the projector 1 is displaying on the combiner 82 information 82A indicating that the road splits between Osaka and Kobe at a point 1.0 km from the current location. As shown in FIG. 2, the image projected from the projector 1 is displayed in the middle of the forward scenery. Thus, the user can acquire information that is helpful for driving, without having to divert his line of sight while driving the vehicle 8.

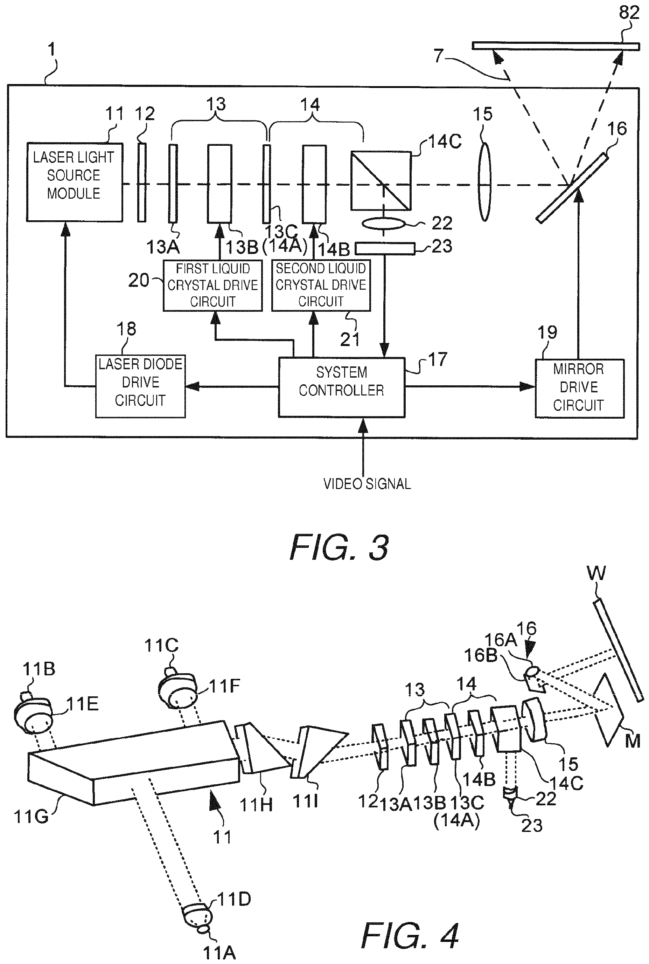

FIG. 3 is a block diagram of the configuration of the projector 1. The projector 1 shown in FIG. 3 comprises a laser light source module 11 (e.g., light source), a wavelength plate 12, a first liquid crystal attenuator 13 (e.g., first attenuator), a second liquid crystal attenuator 14 (e.g., second attenuator), a system controller 17 (e.g., controller), a first liquid crystal drive circuit 20 (e.g., first driver), a second liquid crystal drive circuit 21 (e.g., second driver), and a light receiving element 23. The projector 1 also comprises a converging lens 15, a scanning mirror 16, a laser diode (LD) drive circuit 18, a mirror drive circuit 19, and a converging lens 22.

FIG. 4 is a perspective view of an optical system of the projector 1 illustrating detailed configuration of the optical system of the projector 1. In the illustrated embodiment, the laser light source module 11 (e.g., light source) has a red laser diode 11 A, a green laser diode 11 B, and a blue laser diode 11 C (e.g., a plurality of light emission elements or light emitters). Also, the laser light source module 11 has collimator lenses 11D to 11F, a combining prism 11G, and beam forming prisms 11H and 11I.

The light beams are emitted from the red laser diode 11 A, the green laser diode 11 B, and the blue laser diode 11C. Then, the light beams are made into parallel beams by the corresponding collimator lenses 11 D, 11E, and 11 F. The parallel beams are incident on the combining prism 11 G, and combined into a light beam with a single optical axis (coaxial). The light beam made of the coaxial parallel beams with three colors is emitted from the combining prism 11G. Then, the light beam passes through the beam forming prisms 11H and 11I in that order, and is converted from elliptical polarized light into circular polarized light. Thus, in the illustrated embodiment, the laser light source module 11 (e.g., light source) emits the circular polarized light (e.g., the light). Also, in the illustrated embodiment, the laser light source module 11 includes the laser diodes 11A, 11B and 11C (e.g., a plurality of light emission elements) configured to output different colors of light.

The circular polarized light thus emitted from the laser light source module 11 is converted by the wavelength plate 12 into linear polarized light. Then, the linear polarized light is incident on the first liquid crystal attenuator 13. The incident light is passed through the first liquid crystal attenuator 13 (e.g., first attenuator) and the second liquid crystal attenuator 14 (e.g., second attenuator) in that order and attenuated according to the transmissivity of each. Thus, in the illustrated embodiment, the first liquid crystal attenuator 13 and the second liquid crystal attenuator 14 attenuate the intensity of the incident light (e.g., the light) from the laser light source module 11.

The attenuated light is converged by the converging lens 15 while being reflected by a polarizing mirror M (not shown in FIG. 3) to change its direction of movement, and is incident on the scanning mirror 16. The scanning mirror 16 is made up of a horizontal scanning mirror 16A and a vertical scanning mirror 16B each composed of a MEMS (micro-electro-mechanical system). The horizontal scanning mirror 16A scans the incident reflected light in the horizontal direction. The vertical scanning mirror 16B scans the incident reflected light in the vertical direction. Light can be scanned two-dimensionally by being reflected in order by the horizontal scanning mirror 16A and the vertical scanning mirror 16B.

The light thus scanned goes through a windshield W (not shown in FIG. 3) and is emitted as the scanning laser beam 7 from the housing of the projector 1 to the outside. Then, the scanning laser beam 7 is projected onto the combiner 82. The windshield W is provided to a housing that holds the optical system shown in FIG. 4 and is disposed in the interior of a housing of the projector 1. Thus, an optical path of the laser light (shown by dotted line in FIG. 3) that is originated from the laser light source module 11 and emitted outside the projector 1 as the scanning laser beam 7 is defined within the optical system.

The system controller 17 includes a microcomputer or a processor (processing circuit) that controls the various parts of the projector 1. The system controller 17 also includes other conventional components such as an input interface circuit, an output interface circuit, and storage devices such as a ROM (Read Only Memory) and a RAM (Random Access Memory). The storage devices stores processing results and control programs. Specifically, the RAM stores statuses of operational flags and various control data. The ROM stores the control programs for various operations. It will be apparent to those skilled in the art from this disclosure that the precise structure and algorithms for the system controller 17 can be any combination of hardware and software that will carry out the functions of the projection device according to a preferred embodiment of the present invention.

The system controller 17 shown in FIG. 3 controls the drive of the scanning mirror 16 via the mirror drive circuit 19 based on a video signal inputted from the outside. The system controller 17 also controls the output of the various colored laser diodes 11A to 11C of the laser light source module 11 via the laser diode drive circuit 18. The laser diode drive circuit 18 adjusts the output of the laser diodes according to the drive current.

Also, under the control of the system controller 17, the first liquid crystal drive circuit 20 applies drive voltage to a liquid crystal element 13B of the first liquid crystal attenuator 13, and the second liquid crystal drive circuit 21 applies drive voltage to a liquid crystal element 14B of the second liquid crystal attenuator 14. Consequently, the transmissivity is set or adjusted for each of the first liquid crystal attenuator 13 and the second liquid crystal attenuator 14. The laser light with three colors is attenuated according to the total transmissivity of the first liquid crystal attenuator 13 and the second liquid crystal attenuator 14. In other words, dimming can be performed by the operation of the first liquid crystal attenuator 13 and the second liquid crystal attenuator 14. Thus, in the illustrated embodiment, the first liquid crystal drive circuit 20 drives the first liquid crystal attenuator 13, while the second liquid crystal drive circuit 21 drives the second liquid crystal attenuator 14.

The system controller 17 controls the first liquid crystal drive circuit 20 and the second liquid crystal drive circuit 21 based on the detection result from a light sensor that detects outside light and is provided to the vehicle 8, for example. Alternatively or additionally, the system controller 17 controls them according to manual settings by the user. Consequently, visibility of the projected image can be improved according to the brightness of the environment around the vehicle 8.

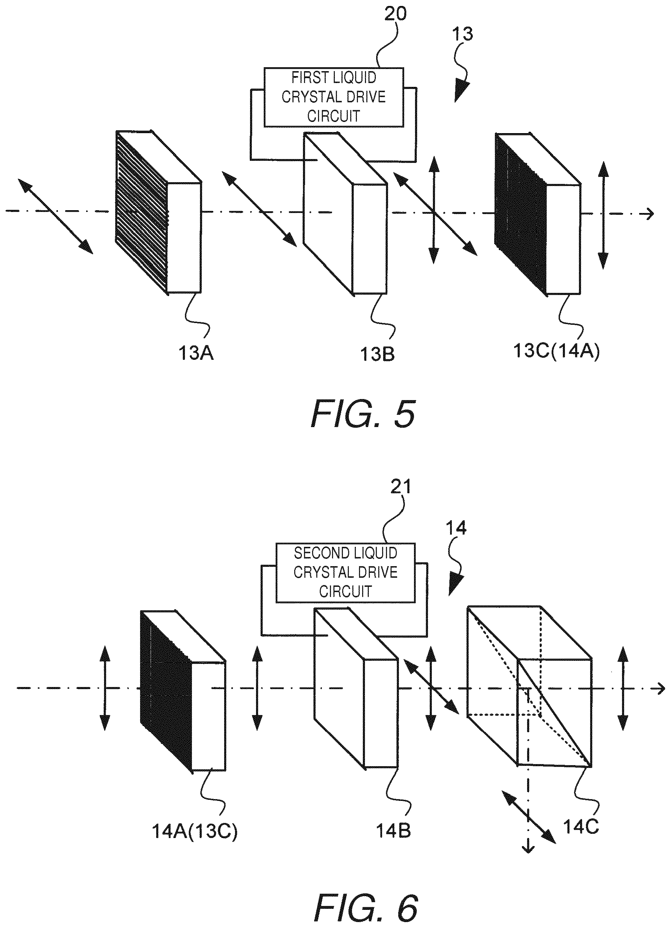

The first and second liquid crystal attenuators 13 and 14 will now be described in detail. In the illustrated embodiment, as shown in FIGS. 3 and 4, the first liquid crystal attenuator 13 is disposed upstream along the optical path of the light relative to the second liquid crystal attenuator 14. The specific configuration of the first liquid crystal attenuator 13 is shown in FIG. 5. The first liquid crystal attenuator 13 includes a polarizing plate 13A (e.g., fourth polarizer), the liquid crystal element 13B (e.g., first liquid crystal element), and a polarizing plate 13C (e.g., first polarizer) along the optical path in this order starting from the laser light source module 11. Thus, the polarizing plate 13A is disposed upstream along the optical path relative to the liquid crystal element 13B. Also, the liquid crystal element 13A is disposed upstream along the optical path of the light relative to the polarizing plate 13C.

The polarizing plate 13A extracts polarized light with a specific polarization azimuth angle from the incident light. The liquid crystal element 13B has a glass plate, transparent electrodes, an orientation film, a liquid crystal, and so forth (not shown). The first liquid crystal drive circuit 20 applies the drive voltage between the transparent electrodes to control the orientation of the liquid crystal, thereby controlling the polarization azimuth of light emitted from the liquid crystal element 13B. The polarizing plate 13C extracts polarized light with a specific polarization azimuth angle from the incident light.

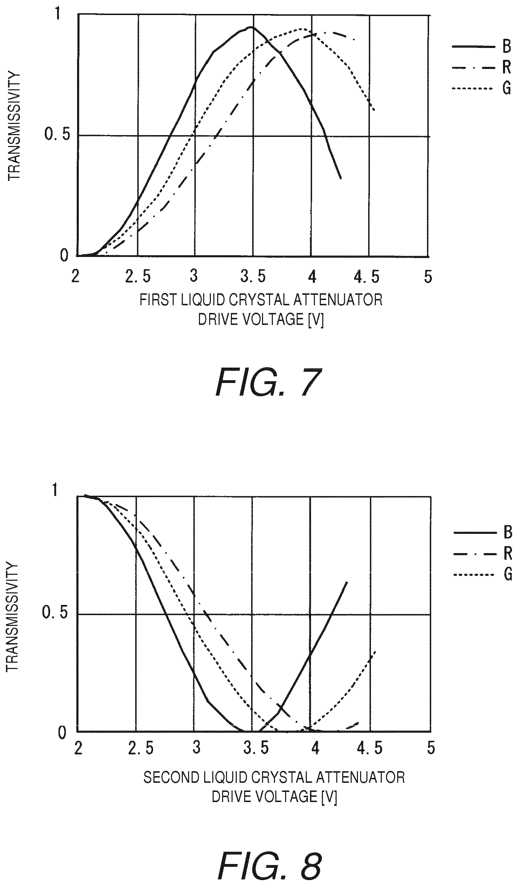

In the illustrated embodiment, the relative polarization angle (e.g., first relative polarization angle θ1) at the first liquid crystal attenuator 13 is set to 90 degrees. The relative polarization angle at the first liquid crystal attenuator 13 is a relative angle between the polarization azimuth angles of polarized light extracted by the polarizing plates 13A and 13C. In other words, the relative polarization angle is the relative angle between the polarization azimuth angle of the light incident on the liquid crystal element 13B and the polarization azimuth angle of the light emitted from the polarizing plate 13 that is disposed downstream along the optical path of the light relative to the liquid crystal element 13B. When the relative polarization angle is set to 90 degrees, the polarizing plates 13A and 13C are said to be in a crossed layout. In this case, although it also depends on the orientation characteristics of the liquid crystal of the liquid crystal element 13B, in the illustrated embodiment, the more the drive voltage is raised, the more light is transmitted by and emitted from the polarizing plate 13C, and the higher is the transmissivity of the first liquid crystal attenuator 13, as shown by the transmissivity characteristics in FIG. 7. As shown in FIG. 7, all three colors have a region with these characteristics.

FIG. 6 shows the specific configuration of the second liquid crystal attenuator 14. The second liquid crystal attenuator 14 includes a polarizing plate 14A (e.g., second polarizer), the liquid crystal element 14B (e.g., second liquid crystal element), and a polarizing plate (polarizing beam splitter: PBS) 14C (e.g., third polarizer) along the optical path in this order starting from the laser light source module 11. Thus, in the illustrated embodiment, the liquid crystal element 14B is disposed between the polarizing plate 14A and the PBS 14C along the optical path of the light. The polarizing plate 13C of the first liquid crystal attenuator 13 and the polarizing plate 14A of the second liquid crystal attenuator 14 are a shared part. Thus, in the illustrated embodiment, the polarizing plate 13C and the polarizing plate 14A are integrally formed by a single polarizer. However, the polarizing plate 13C and the polarizing plate 14A can be independently formed by separate polarizers. The second liquid crystal drive circuit 21 applies the drive voltage between the transparent electrodes of the liquid crystal element 14B, thereby thereby controlling the polarization azimuth of light emitted from the liquid crystal element 14B.

The function of the polarizing plate 14A and the liquid crystal element 14B is the same as that of the polarizing plate 13A and the liquid crystal element 13B of the first liquid crystal attenuator 13. The PBS 14C resolves the incident light into polarized light components that are perpendicular to each other, transmitting one and reflecting the other. The light transmitted by the PBS 14C is guided to the converging lens 15. The light reflected by the PBS 14C is guided to the converging lens 22 and converged by the converging lens 22, and then is received by the light receiving element 23 and is subjected to opto-electrical conversion (FIGS. 3 and 4). The light receiving element 23 is connected to the system controller 17. Thus, in the illustrated embodiment, the light receiving element 23 receives the light distributed by the second liquid crystal attenuator 14.

The system controller 17 corrects color drift in the light transmitted by the second liquid crystal attenuator 14 by controlling the outputs of the various colored laser diodes 11A to 11C in the laser light source module 11 based on the detection signal for the light reception amount received by the light receiving element 23. As to the timing of detection of the color drift, for example, in a state in which one of the various colored laser diodes 11A to 11C has emitted the light while drawing one frame of the projected image, drive of the scanning mirror 16 is performed for each frame while changing the emission color such that the scanning laser beam 7 is directed toward the outside of the windshield W. Specifically, the color drift can be detected for three colors of the laser light by three frames' worth of drawing. This allows the color drift to be detected in a state that will not be noticed by the user.

In the illustrated embodiment, the relative polarization angle (e.g., second relative polarization angle θ2) at the second liquid crystal attenuator 14 is set to be 180 degrees. The relative polarization angle at the second liquid crystal attenuator 14 is a relative angle between the polarization azimuth angles of light resolved and transmitted by the PBS 14C and light extracted by the polarizing plate 14A. In other words, the relative polarization angle is the relative angle between the polarization azimuth angle of the light incident on the liquid crystal element 14B and the polarization azimuth angle of the light emitted from the PBS 14C that is disposed downstream along the optical path of the light relative to the liquid crystal element 14B. When the relative polarization angle is set to 180 degrees, the the polarizing plate 14A and the PBS 14C are said to be in a parallel layout. In this case, although it will also depend on the orientation characteristics of the liquid crystal of the liquid crystal element 14B, in the illustrated embodiment, the more the drive voltage is raised, the less light is transmitted by and emitted from the PBS 14C, and the lower is the transmissivity of the second liquid crystal attenuator 14, as shown by the transmissivity characteristics in FIG. 8. As shown in FIG. 8, all three colors have a region with these characteristics.

In this embodiment, the first liquid crystal attenuator 13 and the second liquid crystal attenuator 14 are laid out next to each other along the optical path. Thus, the product of multiplying the various transmissivity values becomes the total transmissivity.

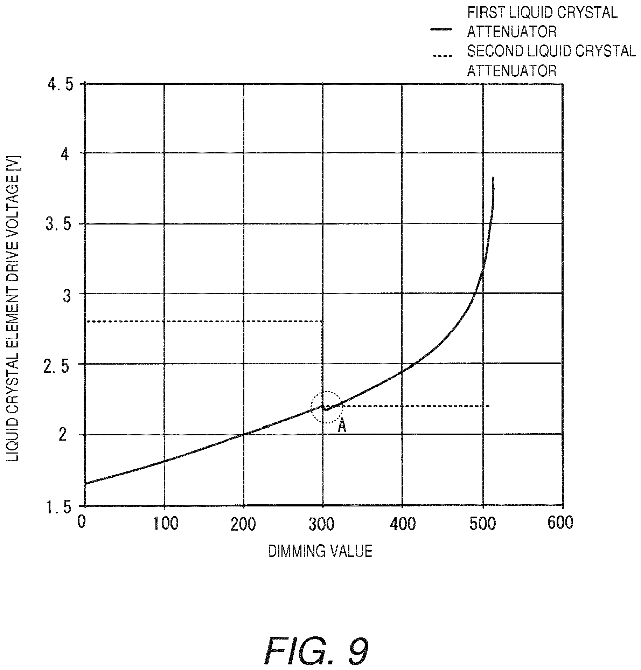

FIG. 9 shows an example of the drive voltages of the first liquid crystal attenuator 13 and the second liquid crystal attenuator 14 when the dimming is performed. The dimming value shown on the horizontal axis in FIG. 9 indicates the brightness of the dimming. The larger is this value, the higher is the brightness.

As shown in FIG. 9, from a dimming value of 500 to close to 300, the drive voltage of the first liquid crystal attenuator 13 (solid line) is decreased as a uniform, continuous curve. Because of the transmissivity characteristics in FIG. 7, the transmissivity of the different colors of the first liquid crystal attenuator 13 decreases in this range of the drive voltage. Also, in this range of the dimming value, as shown in FIG. 9, the drive voltage applied to the second liquid crystal attenuator 14 (broken line) is set to constant at the specified first drive voltage (approximately 2.2 V). In this case, because of the transmissivity characteristics in FIG. 8, the transmissivity of the different colors of the second liquid crystal attenuator 14 is constant at the transmissivity corresponding to the first drive voltage. Therefore, the total transmissivity of the first liquid crystal attenuator 13 and the second liquid crystal attenuator 14 decreases, and the dimming value decreases.

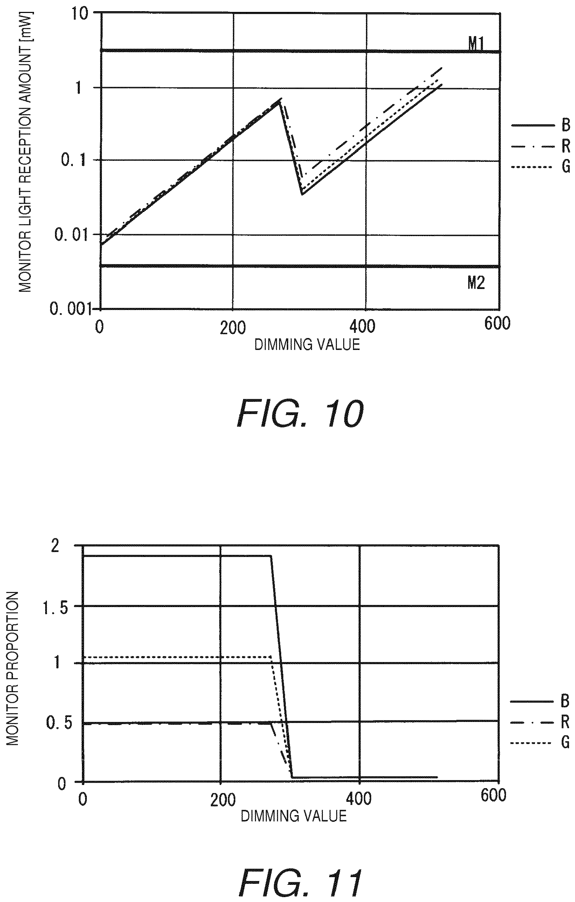

As discussed above, when the constant first drive voltage is applied to the second liquid crystal attenuator 14, the corresponding transmissivity remains constant. On the other hand, the remainder of subtracting the transmissivity from 1 becomes the proportion of the light (monitor proportion or distribution ratio) that is reflected by the PBS 14C of the second liquid crystal attenuator 14 and guided to the light receiving element 23 side. As shown in FIG. 11, the dimming value stays constant from 500 to close to 300 for each color at a specific monitor proportion. In FIG. 11, the monitor proportion of 50% is shown as 1. In this case, the light reception amount by the light receiving element 23 is determined by the monitor proportion and the transmissivity of the first liquid crystal attenuator 13. Thus, as shown in FIG. 10, while the dimming value is from 500 to close to 300, the light reception amount of each color received by the light receiving element 23 (the monitor light reception amount) decreases uniformly.

Meanwhile, when the dimming value is from close to 300 to 0, as shown in FIG. 9, the drive voltage of the first liquid crystal attenuator 13 is decreased in a continuous curve, and the drive voltage of the second liquid crystal attenuator 14 is set to be constant at a specific second drive voltage (approximately 2.8 V) that is higher than the above-mentioned first drive voltage. In this case, the transmissivity of the first liquid crystal attenuator 13 decreases, while the transmissivity of the second liquid crystal attenuator 14 remains constant. Thus, there is a decrease in the total transmissivity, and the dimming value decreases.

Also, the second drive voltage is higher than the first drive voltage. Thus, the transmissivity for each color becomes lower due to the transmissivity characteristics shown in FIG. 8, and the monitor proportion conversely becomes a constant high value for each color as shown in FIG. 11. The light reception amount by the light receiving element 23 at this point is determined by the monitor proportion and the transmissivity of the first liquid crystal attenuator 13. As shown in FIG. 10, when the dimming value is from close to 300 to 0, the monitor light reception amount decreases from a state in which it has temporarily risen from the minimum value of the monitor light reception amount during application of the first drive voltage (when the dimming value is from 600 to close to 300).

The result of the above is that even though a broad dimming range is ensured, the range of the monitor light reception amount can be narrowed. Thus, the monitor light reception amount will not exceed the maximum receivable light amount M1 of the light receiving element 23 (FIG. 10) and will not drop below the minimum receivable light amount M2 of the light receiving element 23 and cause the S/N ratio of the detection signal to suffer. Thus, the proper range of the monitor light reception amount can be set.

Also, as shown by the transmissivity characteristics in FIGS. 7 and 8, the transmissivity for each color is in an inverse magnitude relation between the first liquid crystal attenuator 13 and the second liquid crystal attenuator 14. More specifically, in a region in which the drive voltage ranges from 2 to 3.5 V in FIG. 7, the order of colors corresponding to the increasing order of transmissivity is red, green, and blue. Meanwhile, in a region in which the drive voltage ranges from 2 to 3.5 V in FIG. 8, the order of colors corresponding to the increasing order of transmissivity is blue, green, and red. That is, the order of the colors is reversed between the two. Since the second drive voltage is set higher than the first drive voltage, because of the transmissivity characteristics shown in FIG. 8, the difference in the transmissivity by color with the second liquid crystal attenuator 14 becomes greater, which works for canceling out the difference by color in the transmissivity of the first liquid crystal attenuator 13.

Also, in the illustrated embodiment, the drive voltage of the second liquid crystal attenuator 14 has only two stages, namely the first drive voltage and the second drive voltage. Thus, the monitor proportion is also in two stages. Accordingly, the amount of light transmitted by the second liquid crystal attenuator 14 can be predicted more accurately in color drift correction.

Furthermore, in the illustrated embodiment, in switching from the first drive voltage to the second drive voltage, this switch is made after temporarily raising the drive voltage of the first liquid crystal attenuator 13 that have been decreased up to this point (encircled portion A in FIG. 9). Specifically, the first liquid crystal attenuator 13 is driven so as to temporarily raise the transmissivity of the first liquid crystal attenuator 13. This prevents a sudden drop in the dimming brightness due to a decrease in the transmissivity of the second liquid crystal attenuator 14 caused by switching from the first drive voltage to the second drive voltage.

In the illustrated embodiment, for example, the dimming is performed by setting the dimming value according to the detection result from the light sensor and/or the manual settings by the user. In this case, the system controller 17 controls the first liquid crystal drive circuit 20 to apply the drive voltage to the liquid crystal element 13B according to the dimming value based on the relationship shown in FIG. 9. The system controller 17 controls the transmissivity of the light at the first liquid crystal attenuator 13 by the first liquid crystal drive circuit 20 according to the dimming value. Also, the system controller 17 controls the second liquid crystal drive circuit 21 to apply the drive voltage to the liquid crystal element 14B according to the dimming value based on the relationship shown in FIG. 9. Thus, the system controller 17 controls the second liquid crystal drive circuit 21 to control the monitor proportion of the light distributed to the light receiving element 23 by the second liquid crystal attenuator 14 according to the dimming value. Thus, the control of the second liquid crystal drive circuit 21 is performed corresponding to the control of the first liquid crystal drive circuit 20 based on the dimming value. Therefore, in the illustrated embodiment, the system controller 17 controls the second liquid crystal drive circuit 21 to control the monitor proportion (e.g., distribution ratio) of the light distributed to the light receiving element 23 by the second liquid crystal attenuator 14 according to control of the transmissivity of the light at the first liquid crystal attenuator 13 by the first liquid crystal drive circuit 20.

In the illustrated embodiment, the system controller 17 controls the second liquid crystal drive circuit 21 to increase the monitor proportion (e.g., distribution ratio) of the light distributed to the light receiving element 23 by the second liquid crystal attenuator 14 in response to controlling the first liquid crystal drive circuit 20 to reduce the transmissivity of the light at the first liquid crystal attenuator 13.

In the illustrated embodiment, the system controller 17 controls the second liquid crystal dive circuit 21 to increase the monitor proportion (e.g., distribution ratio) by switching drive of the second liquid crystal attenuator 14 stepwisely. In particular, as illustrated in FIG. 11, the system controller 17 controls the second liquid crystal drive circuit 21 to increase the monitor proportion (e.g., distribution ratio) by switching the drive of the second liquid crystal attenuator 14 in two stages. However, of course, system controller 17 can be configured to control the second liquid crystal drive circuit stepwisely in more than two stages.

In the illustrated embodiment, the system controller 17 controls the second liquid crystal drive circuit 21 to switch the drive of the second liquid crystal attenuator 14 after controlling the first liquid crystal drive circuit 20 to temporarily increase the transmissivity of the light at the first liquid crystal attenuator 13. Specifically, the transmissivity of the light at the first liquid crystal attenuator 13 is temporarily increased by temporarily increasing the drive voltage of the liquid crystal element 13B.

In the illustrated embodiment, as shown in FIG. 7, the transmissivity characteristics (e.g., first transmissivity characteristics) of the first liquid crystal attenuator 13 indicates a relation between the transmissivity of the light at the first liquid crystal attenuator 13 for each color and the drive voltage of the first liquid crystal attenuator 13. Also, as shown in FIG. 8, the transmissivity characteristics (e.g., second transmissivity characteristics) of the second liquid crystal attenuator 14 indicates a relation between the transmissivity of the light at the second liquid crystal attenuator 14 for each color and the drive voltage of the second liquid crystal attenuator 14. The transmissivity characteristics of the first liquid crystal attenuator 13 and the transmissivity characteristics of the second liquid crystal attenuator 14 are different from each other.

Specifically, in the illustrated embodiment, the descending order of transmissivities of the colors at a given drive voltage in a drive voltage region of the transmissivity characteristics of the first liquid crystal attenuator 13 shown in FIG. 7 (e.g., Blue, Green, Red at 2.2V) is reversed from the descending order of transmissivities of the colors at a given drive voltage in a drive voltage region of the second transmissivity characteristics (e.g., Red, Green, Blue at 2.8V).

### SECOND EMBODIMENT

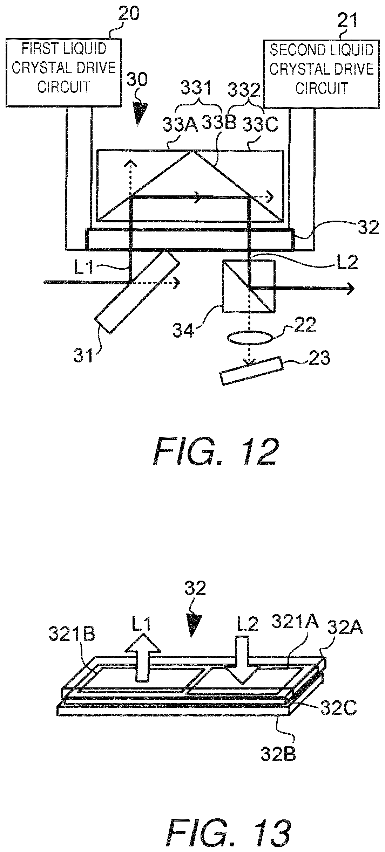

A second embodiment of the present invention will now be described. FIG. 12 shows the configuration of a liquid crystal attenuator 30 (e.g., first and second attenuators) of a projector in accordance with the second embodiment. The projector in accordance with the second embodiment is basically identical to the projector 1 shown in FIG. 3, except for the configurations explained below. Thus, the detailed configuration of the projector will be omitted for the sake of brevity. The liquid crystal attenuator 30 shown in FIG. 12 is disposed in place of the first liquid crystal attenuator 13 and the second liquid crystal attenuator 14 in the configuration of the project 1 in accordance with the first embodiment (FIG. 3).

The attenuator 30 comprises a plate-type PBS (polarizing beam splitter) 31 (e.g., fourth polarizer), a liquid crystal component 32 (e.g., first and second liquid crystal elements), a PBS 331 (e.g., first polarizer), a PBS 332 (e.g., second polarizer), and a PBS 34 (e.g., third polarizer). The solid line arrow shown in FIG. 12 indicates the optical path of the light in the optical system of the projector. In the illustrated embodiment, the attenuator 30 includes a prism 33A (e.g., first prism), a prism 33B (e.g., second prism), and a prism 33C (e.g., third prism). The prism 33B is coupled to the prism 33A. The prism 33C is coupled to the prism 33B. In other words, the prisms 33A, 33B and 33C are fixedly coupled as an integral member. Also, in the illustrated embodiment, the PBS 331 (e.g., first polarizer) is formed by the prism 33A and the prism 33B. The PBS 332 (e.g., second polarizer) is formed by the prism 33B and the prism 33C. With this configuration, the light reflected at an interface between the prism 33A and the prism 33B is incident on an interface between the prism 33B and the prism 33C.

The PBS 31 resolves the incident light into polarized light components that are perpendicular to each other, transmitting one and reflecting the other and guiding it as outbound light L1 to the liquid crystal component 32. A light blocker (not shown) is provided between the PBSs 31 and 34 so that light transmitted through the PBS 31 will not be incident on the PBS 34 (discussed below).

The outbound light L1 that has been transmitted through the liquid crystal component 32 is transmitted by the prism 33B and is incident on the prism 33A. Then, the outbound light L1 is resolved into polarized light components that are perpendicular to each other, transmitting one and reflecting the other. The reflected light is transmitted inside the prism 33B and is incident on the prism 33C. Then, the reflected light is resolved into polarized light components that are perpendicular to each other, transmitting one and reflecting the other by the prism 33C. The reflected light is transmitted as return light L2 through the liquid crystal component 32. The return light L2 is resolved by the PBS 34 into polarized light components that are perpendicular to each other, with one being transmitted and the other reflected. The reflected light is guided downstream of the optical system (that is, the converging lens 15 side in FIG. 3). Meanwhile, the transmitted light is guided to and converged by the converging lens 22, then received by the light receiving element 23 and subjected to opto-electrical conversion. The light receiving element 23 is the same as in the first embodiment.

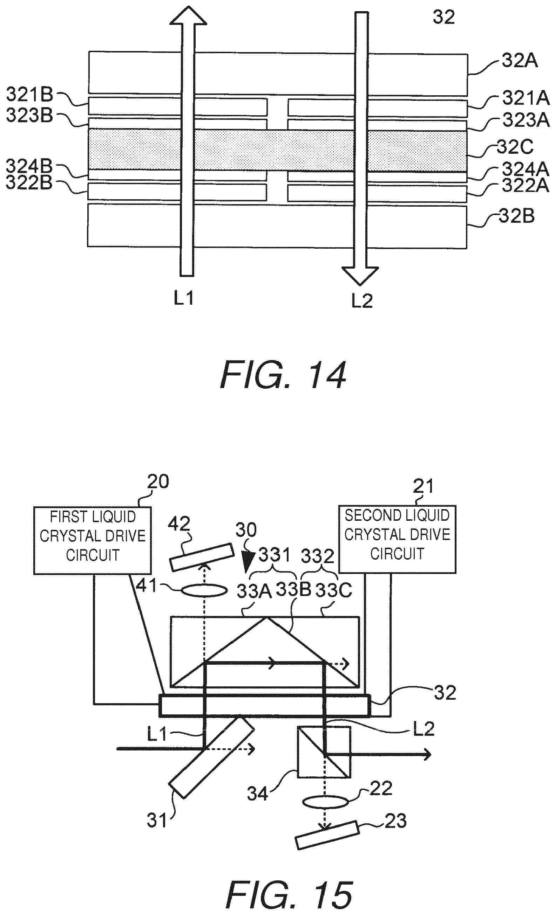

The configuration of the liquid crystal component 32 will now be discussed in detail. FIG. 13 is a perspective view of the liquid crystal component 32. FIG. 14 is a cross sectional view of the liquid crystal component 32. The liquid crystal component 32 comprises a glass plate 32A, a glass plate 32B, a liquid crystal 32C, orientation films 323A, 323B, 324A, and 324B, and transparent electrodes 321 A, 321 B, 322A, and 322B.

Part of the liquid crystal 32C is sandwiched between the orientation films 323A and 324A. The portion composed of the orientation films 323A and 324A and the liquid crystal 32C is sandwiched from both sides by the transparent electrodes 321 A and 322A. Similarly, the other portion of the liquid crystal 32C is sandwiched between the orientation films 323B and 324B. The portion composed of the orientation films 323B and 324B and the liquid crystal 32C is sandwiched from both sides by the transparent electrodes 321 B and 322B. The configuration sandwiched by the transparent electrodes 321 A and 322A forms a second liquid crystal element of the liquid crystal component 32, while the configuration sandwiched by the transparent electrodes 321 B and 322B forms a first liquid crystal element of the liquid crystal component 32. The first and second liquid crystal elements of the liquid crystal component 32 are further sandwiched from both sides by the glass plates 32A and 32B. The liquid crystal included in the first liquid crystal element and the liquid crystal included in the second liquid crystal element are integrated as the liquid crystal 32C in a single space. Thus, in the illustrated embodiment, the first liquid crystal element and the second liquid crystal element are formed by the single liquid crystal 32C (e.g., single liquid crystal element).

The outbound light L1 is transmitted through the portion sandwiched between the transparent electrodes 321 B and 322B (i.e., first liquid crystal element). On the other hand, the return light L2 is transmitted through the portion sandwiched between the transparent electrodes 321 A and 322A (i.e., second liquid crystal element). Drive voltage is be applied between the transparent electrodes 321B and 322B by the first liquid crystal drive circuit 20. Also, drive voltage is be applied between the transparent electrodes 321 A and 322A by the second liquid crystal drive circuit 21. Specifically, different portions are independently driven within the same or single liquid crystal component 32.

In the illustrated embodiment, a first attenuator is formed of the PBS 31, the first liquid crystal element of the liquid crystal component 32, and the PBS 331. The relative polarization angle of the first attenuator is set to 90 degrees (i.e., crossed layout). Also, the second attenuator is formed of the PBS 332, the second liquid crystal element of the liquid crystal component 32, and the PBS 34. The relative polarization angle of the second attenuator is set to 180 degrees (i.e., parallel layout). Therefore, the first and second attenuators have the same transmissivity characteristics as the transmissivity characteristics between transmissivity and drive voltage shown in FIGS. 7 and 8 in accordance with the first embodiment, for example.

With this projector, the PBS 332 is provided. Thus, even if the extinction ratio of the light reflected by the PBS 331 is low and there is variance in the polarization azimuth, this variance can be absorbed. In a modification example of this embodiment, the configuration can be modified such that no prism 33C is provided and all of the light reflected by the prism 33B is transmitted as the return light L2.

In the illustrated embodiment, while performing dimming, for example, the drive voltage is applied to the first liquid crystal element of the liquid crystal component 32 in the same manner as the drive voltage applied to the first liquid crystal attenuator 13, as shown in FIG. 9. Also, the drive voltage is applied to the second liquid crystal element of the liquid crystal component 32 in the same manner as the drive voltage applied to the second liquid crystal attenuator 14, as shown in FIG. 9. Thus, the behavior of the light reception amount at the light receiving element 23 can be the same as that shown in FIG. 10. Therefore, it is possible to obtain the same effect as in the first embodiment.

In the illustrated embodiment, the same liquid crystal 32C in the liquid crystal component 32 is shared by the first attenuator and the second attenuator. Thus, even if there is an environmental temperature change or the like, the characteristics of the relation between transmissivity and drive voltage at the first attenuator and second attenuator will fluctuate in the same way. Therefore, the color drift that would be caused by the above-mentioned environmental temperature change can be suppressed. Also, since just one liquid crystal component is needed, this leads to a lower cost of parts.

### THIRD EMBODIMENT

A third embodiment of the present invention will now be described. FIG. 15 shows the configuration of a liquid crystal attenuator 30 (e.g., first and second attenuators) of a projector in accordance with the third embodiment. The configuration of the liquid crystal attenuator 30 shown in FIG. 15 is identical to the liquid crystal attenuator 30 shown in FIG. 12, except that the liquid crystal attenuator 30 further comprises a converging lens 41 and a light receiving element 42 (e.g., second light receiving element). The conversing lens 42 converges the light resolved and transmitted by the PBS 331. The light receiving element 42 receives the converged light distributed by and emitted from the PBS 331 (e.g., first polarizer). Then, the light receiving element 42 subjects the light to opto-electrical conversion.

With this configuration, the monitor proportion of the light receiving element 23 produced by the PBS 34 can be detected based on the light reception amount detected by the light receiving element 42 and the light reception amount detected by the light receiving element 23. The drive voltage of the second liquid crystal element of the liquid crystal component 32 can be controlled so that the detected monitor proportion will be the target value. Consequently, the amount of light emitted by the second attenuator (the light reflected by the PBS 34) can be accurately predicted from the light reception amount detected by the light receiving element 23 during the color drift correction. Furthermore, detection of the monitor proportion and control of the drive voltage of the second liquid crystal element can be performed by the system controller 17.

### MODIFIED EMBODIMENT

In the above embodiments, the drive voltage of the second liquid crystal element or the second liquid crystal attenuator is switched in two stages, but can instead be switched in three or more stages.

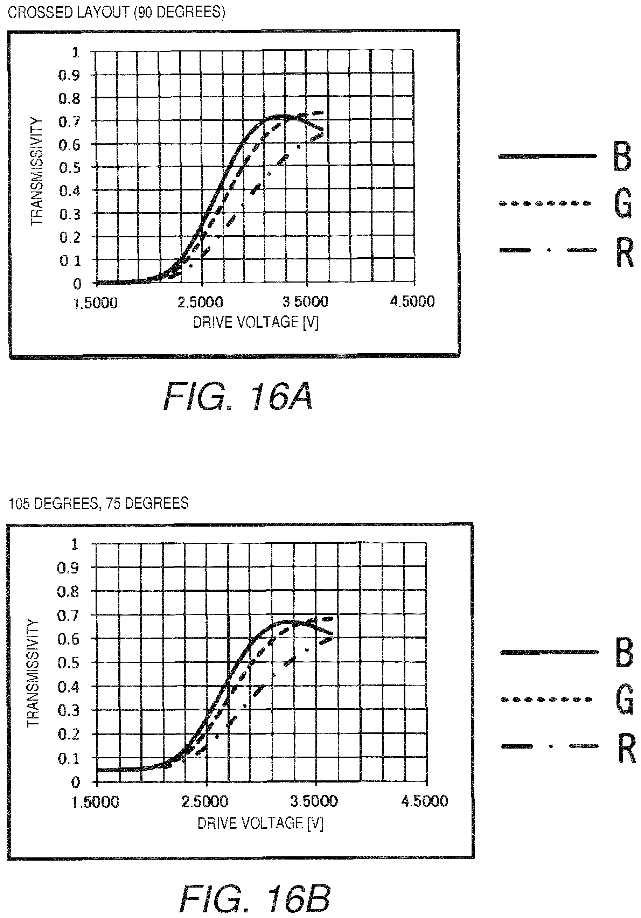

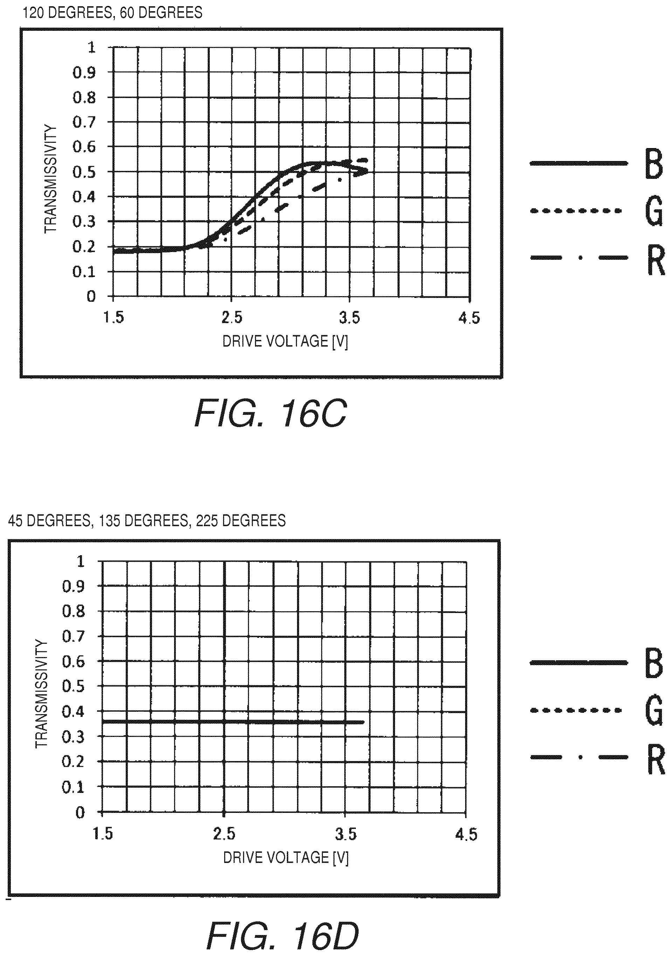

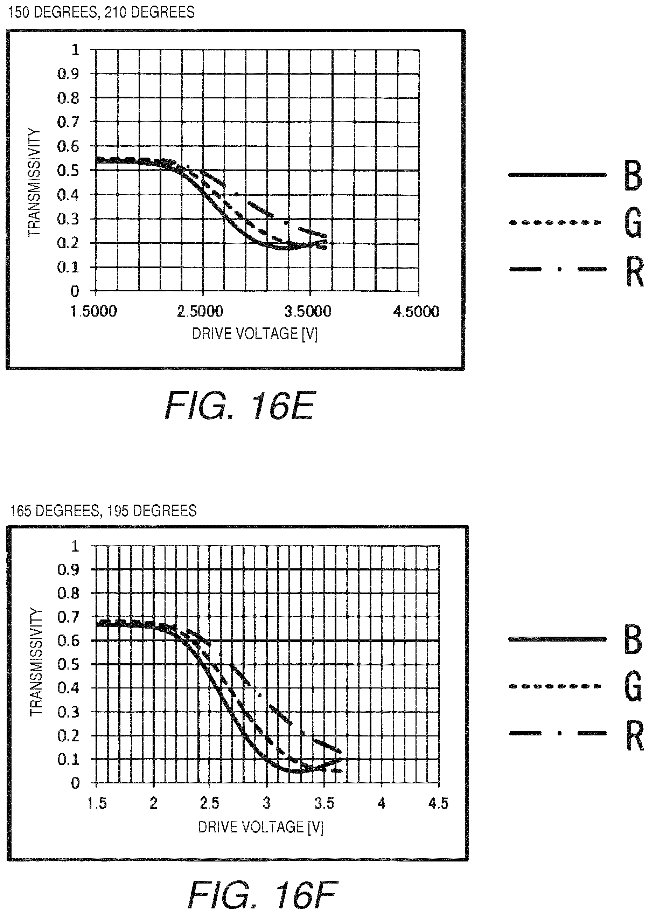

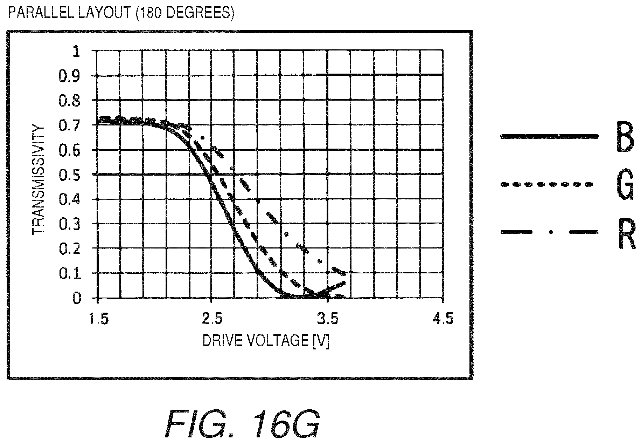

FIGS. 16A to 16G illustrate graphs of examples of the transmissivity characteristics between drive voltage and transmissivity for each color when the relative polarization angle of the liquid crystal attenuator is varied from 45 degrees to 225 degrees by 15 degrees at a time. As understood from FIGS. 16A to 16G, the layout is not limited to the crossed layout (FIG. 16A) or parallel layout (FIG. 16G). The relative polarization angle θ1 of the first liquid crystal attenuator 13 can be set to 45 degrees < θ1 < 135 degrees (FIGS. 16A, 16B, 16C and 16D), and the relative polarization angle θ2 of the second liquid crystal attenuator 14 can be set to 135 degrees < θ2 < 225 degrees (FIGS. 16D, 16E, 16F and 16G).

Also, in the above embodiments, if the polarization azimuth angle of the light emitted from the wavelength plate 12 has good precision, then the polarizing plate 13A of the first liquid crystal attenuator 13 (first embodiment) need not be provided. Also, the PBS 31 of the liquid crystal attenuator 30 (second and third embodiments) can be replaced with a mirror.

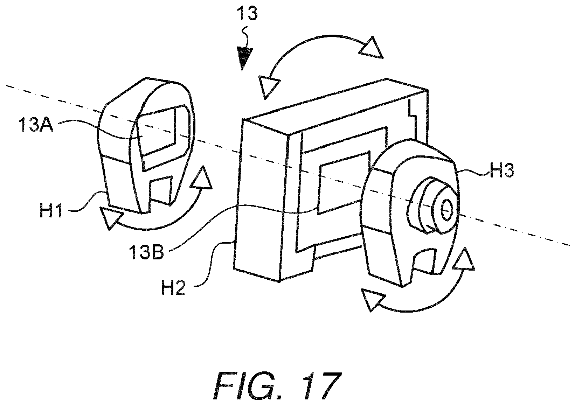

Also, in the above embodiment, a configuration that allows rotary adjustment of the liquid crystal elements and the polarizing plates during the manufacture of the liquid crystal attenuator can be provided. For example, FIG. 17 shows a perspective view of a rotary adjustment mechanism of various parts in the first liquid crystal attenuator 13. The rotary adjustment mechanism includes holders H1, H2 and H3. The holder H1 holds the polarizing plate 13A, the holder H2 holds the liquid crystal element 13B, and the holder H3 holds the polarizing plate 13C (FIG. 5). The holders H1, H2 and H3 are all rotatable. The system controller 17 (FIG. 3) is operatively coupled to actuators to rotate the holders H1, H2 and H3, respectively, and drives the actuators to their desired rotational position. Specifically, the system controller 17 can rotate the holders H1, H2 and H3 based on the light detection result on the emission sides of the the polarizing plate 13A, the liquid crystal element 13B, and the polarizing plate 13C, to rotationally adjust the polarizing plate 13A, the liquid crystal element 13B, and the polarizing plate 13C to their desired rotational positions. Thus, in the illustrated embodiment, the polarization direction of the polarizing plate 13A (e.g., fourth polarizer) is adjustable according to the polarization direction of the light incident on the liquid crystal element 13B (e.g., first liquid crystal element), for example. The same kind of rotary adjustment mechanism can also be provided to the second liquid crystal attenuator 14.

Embodiments of the present invention are described above, but within the scope of the present invention, various modifications of these embodiments are possible.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A projection device comprising:
a light source configured to emit light;
a first attenuator and a second attenuator configured to attenuate intensity of the light from the light source;
a first driver configured to drive the first attenuator;
a second driver configured to drive the second attenuator;
a light receiving element configured to receive the light distributed by the second attenuator; and
a controller configured to control the second driver to control distribution ratio of the light distributed to the light receiving element by the second attenuator according to control of transmissivity of the light at the first attenuator by the first driver.

2. The projection device according to claim 1, wherein
the controller is configured to control the second driver to increase the distribution ratio of the light distributed to the light receiving element by the second attenuator in response to controlling the first driver to reduce the transmissivity of the light at the first attenuator.

3. The projection device according to claim 1 or 2, wherein
the controller is configured to control the second driver to increase the distribution ratio by switching drive of the second attenuator stepwisely.

4. The projection device according to claim 3, wherein
the controller is configured to control the second driver to switch the drive of the second attenuator after controlling the first driver to temporarily increase the transmissivity of the light at the first attenuator.

5. The projection device according to claim 3 or 4, wherein
the controller is configured to control the second driver to increase the distribution ratio by switching the drive of the second attenuator in two stages.

6. The projection device according to any one of claims 1 to 5, wherein
the light source includes a plurality of light emission elements configured to output different colors of light, and
a first transmissivity characteristics indicating a relation between the transmissivity of the light at the first attenuator for each color and a drive voltage of the first attenuator and a second transmissivity characteristics indicating a relation between the transmissivity of the light at the second attenuator for each color and a drive voltage of the second attenuator are different from each other.

7. The projection device according to claim 6, wherein
a descending order of transmissivities of the colors at a given drive voltage in a drive voltage region of the first transmissivity characteristics is reversed from a descending order of transmissivities of the colors at a given drive voltage in a drive voltage region of the second transmissivity characteristics.

8. The projection device according to any one of claims 1 to 7, wherein
the first attenuator includes a first liquid crystal element and a first polarizer, and
the second attenuator includes a second polarizer, a second liquid crystal element, and a third polarizer.

9. The projection device according to claim 8, wherein
the first polarizer and the second polarizer are formed by a single polarizer.

10. The projection device according to claim 8, wherein
the first polarizer and the second polarizer are formed by separate polarizers.

11. The projection device according to any one of claims 8 to 10, wherein
a first relative polarization angle θ1 at the first attenuator is 45 degrees < θ1 < 135 degrees, where the first relative polarization angle θ1 being a relative angle between a polarization azimuth angle of the light incident on the first liquid crystal element and a polarization azimuth angle of the light emitted from the first polarizer that is disposed downstream along an optical path of the light relative to the first liquid crystal element, and
a second relative polarization angle θ2 at the second attenuator is 135 degrees < θ2 < 225 degrees, where the second relative polarization angle θ2 being a relative angle between a polarization azimuth angle of the light incident on the second liquid crystal element and a polarization azimuth angle of the light emitted from the third polarizer that is disposed downstream along the optical path of the light relative to the second liquid crystal element.

12. The projection device according to claim 11, wherein
the first relative polarization angle θ1 is 90 degrees, and
the second relative polarization angle θ2 is 180 degrees.

13. The projection device according to any one of claims 8 to 12, wherein
the first attenuator further includes a fourth polarizer that is disposed upstream along an optical path of the light relative to the first liquid crystal element.

14. The projection device according to claim 13, wherein
a polarization direction of the fourth polarizer is adjustable according to a polarization direction of the light incident on the first liquid crystal element.

15. The projection device according to any one of claims 8 to 14, further comprising
a second light receiving element configured to receive the light distributed by and emitted from the first polarizer.
